(19) **Europäisches Patentamt European Patent Office Office européen des brevets**

(11) **EP 4 289 159 B1**

(12) **FASCICULE DE BREVET EUROPEEN**

(45) Date de publication et mention de la délivrance du brevet:
**03.12.2025 Bulletin 2025/49**

(21) Numéro de dépôt: **22705018.4**

(22) Date de dépôt: **26.01.2022**

(51) Classification Internationale des Brevets (IPC):
***H04W 12/02*** *(2009.01)*

(52) Classification Coopérative des Brevets (CPC):
**H04L 63/0421; G06F 21/6254; H04L 63/0407; H04W 12/02**

(86) Numéro de dépôt international:
**PCT/EP2022/051691**

(87) Numéro de publication internationale:
**WO 2022/167275 (11.08.2022 Gazette 2022/32)**

(54) **PROCÉDÉ ET DISPOSITIF DE TRANSMISSION OU D'ÉCHANGE D'INFORMATION ANONYME AU SEIN D'UN RÉSEAU DE CONFIANCE**

VERFAHREN UND VORRICHTUNG ZUM SENDEN ODER AUSTAUSCHEN ANONYMER INFORMATIONEN IN EINEM VERTRAUENSWÜRDIGEN NETZWERK

METHOD AND DEVICE FOR TRANSMITTING OR EXCHANGING ANONYMOUS INFORMATION WITHIN A TRUSTED NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.02.2021 FR 2101055**

(43) Date de publication de la demande:
**13.12.2023 Bulletin 2023/50**

(73) Titulaire: **Commissariat à l'Energie Atomique et aux Energies Alternatives
75015 Paris (FR)**

(72) Inventeurs:
- **LAURENT, Frédéric
  78350 Jouy-en-Josas (FR)**
- **OLIVEREAU, Alexis
  91400 Orsay (FR)**
- **POLVE, Baptiste
  91160 Champlan (FR)**

(74) Mandataire: **Atout PI Laplace
Immeuble Up On
25 Boulevard Romain Rolland
CS 40072
75685 Paris Cedex 14 (FR)**

(56) Documents cités:
| EP-A1- 2 924 620 | US-A1- 2013 232 198 |
| US-A1- 2019 044 916 | US-A1- 2020 076 772 |

EP 4 289 159 B1

**Description**

Domaine de l'invention

L'invention est dans le domaine technique des protocoles de communication, et concerne plus particulièrement un procédé de transmission anonyme monodirectionnel ou d'échange anonyme bidirectionnel d'informations au sein d'un réseau de partenaires, de manière anonyme et sécurisée sans aucun tiers de confiance, en préservant l'anonymat du/des émetteur(s).

Etat de la Technique

L'anonymisation au niveau réseau est aujourd'hui à un état très embryonnaire. Les solutions actuelles connues que sont l'utilisation d'un réseau privé virtuel (VPN) ou le réseau superposé Tor (« The Onion Router ») ou encore le réseau anonyme I2P pour « Invisible Internet Project », reposent toutes sur un « tiers de confiance » qui par construction voit l'intégralité du trafic montant et descendant échangé entre les points terminaux (« end-points ») de la communication.
La demande de brevet WO/2019/072470A1 apporte une solution à ce problème en introduisant deux notions complémentaires - l'asymétrie des routes montantes et descendantes en sortie de la plateforme d'échange et la circulation de bruit anonyme à tous les nœuds intermédiaires d'une route donnée - grâce auxquelles, aucun élément de la plateforme n'est en possession de l'ensemble du contenu. Cependant, cette architecture ne permet qu'une communication anonymisée et sécurisée de point à point et elle ne permet pas une communication (i.e. une transmission ou un échange) de point à multipoints ou de multipoints à multipoints.
Il existe par ailleurs un besoin émergent qui est non satisfait pour permettre des échanges sur des réseaux de confiance d'échanges anonymes entre partenaires partageant certains besoins communs mais qui pour des raisons diverses (e.g. réglementaire, concurrence, préservation d'image, risques légaux) ne souhaitent pas communiquer entre eux ces informations de manière directe.
L'invention est définie par les revendications indépendantes. Aussi, au vu des besoins émergents et des inconvénients existants, les communications dans le cadre des réseaux de confiance doivent présenter les propriétés suivantes :

- permettre la diffusion rapide (voire quasi temps réel) de manière mono ou bidirectionnelle, d'informations aux membres du réseau de confiance (appelé aussi « groupe de confiance ») ou aux membres de sous-groupes (appelés aussi « cercles de confiance ») de ce réseau ;
- garantir que seuls les membres du groupe de confiance seront destinataires de l'information et que, par conséquent, aucun tiers extérieur au groupe n'est en mesure d'accéder à cette information. Ceci implique qu'il n'existe pas de tiers de confiance susceptible : (1) de briser l'anonymat de l'émetteur d'une information donnée ; (2) d'accéder ou modifier cette information, indépendamment du niveau de protection (typiquement par chiffrement) intrinsèque de cette information ; (3) de savoir qu'une donnée a été émise selon une déclinaison où un système de génération de bruit a été mis en œuvre ;
- permettre, dans une déclinaison particulière dite « garantie », aux membres du réseau d'être en mesure de manière individuelle d'effectuer cette garantie, c'est-à-dire qu'un membre n'a pas besoin d'avoir confiance dans les autres membres, pour bénéficier de cette garantie ;
- permettre au(x) récepteur(s) de qualifier l'information par un degré de confiance alors que son expéditeur est (et doit rester) inconnu ;
- offrir la possibilité à chaque membre du réseau de contrôler (i.e. vérifier) en temps réel les membres du réseau, et ainsi éviter une association entre plusieurs membres visant à exclure un ou plusieurs autres membres de certaines transmissions ou de certains échanges ou visant à casser l'anonymat de certains membres ou à intercepter ou modifier une partie des transmissions ou des échanges.

Or, il n'existe aujourd'hui aucune solution permettant de couvrir l'ensemble de ces besoins, dont celui de permettre à chaque membre d'un réseau de contrôler en temps réel les autres membres du réseau, en particulier dans un cadre de communication à faible latence (« low latency communication »).
Les approches suivantes proposent des solutions partielles :
« Freenet » est une plateforme « pair à pair » (P2P) décentralisée permettant des communications « résistantes » à la censure. En pratique, c'est un service de partage d'information qui permet à un individu A de diffuser largement des informations, rendant difficile leur interception et leur suppression grâce à la distribution de blocs chiffrés à certains membres du réseau Freenet qui seront chargés, de fait, d'en assurer le stockage et la retransmission sur demande. Chaque bloc est dupliqué chez plusieurs utilisateurs, rendant ainsi difficile toute censure de l'information qu'il contient. L'information est ensuite accessible au travers d'un lien qui permettra d'accéder et de réassembler les différents blocs.

Freenet n'est pas anonyme en soit, mais combiné avec Tor, il permet de diffuser l'information de manière anonyme à un nombre important de destinations. Freenet ne peut garantir l'accès à la donnée aux seuls partenaires. En effet, toute personne disposant du lien sera en mesure d'accéder à l'information. Conceptuellement, Freenet est donc plus un moyen de stockage partagé, distribué et persistant qu'un moyen de transmission à faible latence.

« Zeronet » est un réseau P2P d'échange d'information, conceptuellement similaire à Freenet mais qui repose sur des technologies plus récentes (blockchain et BitTorrent). La principale différence réside dans le fait que les copies de l'information sont stockées uniquement chez ceux qui ont consulté l'information et non potentiellement par tous les membres du réseau P2P. Par conséquent, Zeronet présente les mêmes limitations que Freenet par rapport au besoin.

Des publications anciennes relatives au multicast anonyme ont décrit des mécanismes permettant de masquer à un attaquant le centre de contrôle d'un réseau (qui est aujourd'hui repris pour les Botnet), mais les informations ne vont que dans un sens, car seule la tête du réseau maîtrise celui-ci.

Le système d'anonymisation DAISY, décrit dans l'article de Chan, Chi-Bun, and Cristina Nita-Rotaru, "DAISY: Increasing Scalability and Robustness of Anonymity Systems.", s'appuie sur une architecture à 3 niveaux dans laquelle un noyau central de routeurs (« Core Delegate Network ») a pour objectif de complexifier la corrélation entre les entrées et sorties du système d'anonymisation. Mais la description de DAISY précise que cette solution ne peut en l'état rendre possible des communications de groupe anonymes.

Les services cachés sur Tor (« Tor hidden services ») peuvent également s'assimiler à un service de diffusion large anonyme, sous réserve que le service caché mette en œuvre également un contrôle d'accès. Par exemple, l'ICIJ « International Consortium of Investigative Journalists » utilise SecureDrop, qui est un service caché sur Tor, pour recevoir des informations de lanceurs d'alertes et les diffuser à l'ensemble de ses journalistes. Cependant, ce service caché est par construction un tiers de confiance car il sera le point focal de l'information diffusée entre les membres du réseau. Il est le seul à contrôler la diffusion aux membres du réseau de partenaires et peut donc « choisir » de restreindre la diffusion d'une information à un ou plusieurs membres du réseau de partenaires. Il voit l'intégralité des flux entrants et sortants et est donc théoriquement susceptible d'accéder ou modifier leurs contenus.

De plus, c'est un système intrinsèquement unidirectionnel, qui impose une gestion au niveau de la couche applicative pour le rendre bidirectionnel.

Par ailleurs, de même que les autres solutions citées préalablement, un service caché de Tor ne permet pas:

- de garantir que les informations sont effectivement diffusées aux seuls membres du réseau et ce même si un mécanisme de contrôle d'accès est ajouté au service ;

- d'offrir la possibilité à chaque membre du réseau de contrôler (i.e. vérifier) en temps réel les membres du réseau (et d'éviter ainsi une association de plusieurs membres visant à exclure un ou plusieurs membres de certaines transmissions ou de certains échanges) ;

- de garantir que les informations transmises ou échangées ne peuvent être interceptées et/ou modifiées par un tiers susceptible de mener des attaques évoluées contre les techniques de chiffrement de bout-en-bout actuelles et futures ;

- de permettre nativement la constitution de différents cercles de confiance au sein du réseau de membres ;

- de permettre la possibilité de cacher l'événement d'émission d'un message utile.

La présente invention répond à ces différents besoins.

Résumé de l'invention

Un objet de la présente invention est de proposer une architecture et un mécanisme de transmission anonyme d'informations de point à multipoints ou de multipoints à multipoints à faible latence. La transmission est anonymisée, sécurisée et sans tiers de confiance. L'invention permet l'établissement de réseaux de confiance totalement anonymes pour la transmission anonyme monodirectionnelle ou l'échange anonyme bidirectionnel d'informations.

Avantageusement, la présente invention vise à permettre l'échange d'informations entre partenaires, au sein d'un réseau de confiance, de manière réellement anonymisée, sécurisée et sans tiers de confiance.

Selon différents modes de réalisation, l'invention permet également :

- de garantir aux membres du réseau qu'aucun tiers extérieur au réseau n'est en mesure d'accéder aux, ou de modifier, les informations transférées ;

- de garantir aux membres du réseau qu'aucune collusion par un sous-groupe de membres n'est en cours contre un ou plusieurs autres membres ;

- d'établir des groupes ou cercles de confiance présentant des niveaux de confiance différenciés, afin de qualifier le degré de confiance de l'information anonyme reçue par les récepteurs.

De manière générale, le procédé de l'invention s'appuie sur une architecture comprenant une solution d'anonymisation réseau (en pratique pouvant être un réseau en superposition « overlay network » d'un réseau de communication standard sous-jacent) ; un ensemble ou groupe ou cercle de partenaires souhaitant échanger des informations entre eux de manière anonyme ; et un ensemble (ou « pool ») de proxies opérés par des acteurs indépendants, ces acteurs pouvant être des partenaires du groupe, et chargés de relayer les informations d'un émetteur du groupe de partenaires aux autres partenaires du groupe.

Avantageusement la présente invention introduit un nouveau mode de communication aujourd'hui inexistant, nommé mode de communication « multicast anonyme », c'est-à-dire donnant la possibilité de diffuser rapidement, de manière mono ou bidirectionnelle, des informations au sein d'un groupe de confiance, sans qu'aucun des récepteurs ne soit en mesure de déterminer l'émetteur de ces informations, et également sans qu'une quelconque autre entité (typiquement un "tiers de confiance" mais également un tiers extérieur au réseau de confiance) ne soit en mesure d'effectuer cette détermination.

Les domaines d'application industrielle de l'invention sont multiples tels que ceux de l'énergie, du transport, de la banque pour ne citer que ceux-là, mais couvrent sans limitation des solutions mettant en œuvre tout réseau de confiance mono ou multi niveaux pour l'échange anonyme de données, dont notamment :

- un réseau de confiance pour l'échange d'informations afin d'accélérer la détection de fraude bancaire, au moyen de paiement ou à l'assurance ;

- un réseau de confiance pour l'échange d'informations sur les attaques cyber ;

- un réseau de confiance pour l'échange d'informations entre services d'intelligence étatiques ;

- un réseau de confiance pour l'échange d'informations entre journalistes ;

- un réseau de confiance pour l'échange d'informations commerciales confidentielles (par exemple au sujet de fournisseurs) entre partenaires commerciaux.

Dans une variante de réalisation, la présente invention permet la réalisation d'une architecture de messagerie instantanée anonyme, devant rester compatible avec les obligations en termes d'interceptions légales.

Pour obtenir les résultats recherchés, il est proposé un procédé de transmission anonyme d'information, la transmission étant une communication point-à-multipoints ou une communication multipoints à multipoints entre des membres d'un même réseau de confiance, un réseau de confiance étant prédéfini par une pluralité de membres et une pluralité de proxies indépendants, la communication au sein d'un réseau de confiance s'effectuant sur une plateforme réseau d'anonymisation masquant les adresses IP des membres dudit réseau de confiance. Le procédé est mis en œuvre par ordinateur et comprend des étapes consistant à :

- générer par un membre d'un réseau de confiance comprenant N' membres et N proxies, une pluralité N de fragments complémentaires de données, à partir d'un paquet de données initial, tel que la recombinaison des N fragments complémentaires permet de reconstruire le paquet de données initial ;

- transmettre, par ledit membre émetteur via la plateforme réseau d'anonymisation, chaque fragment complémentaire généré, respectivement à un proxy indépendant parmi les N proxies ;

- retransmettre, par chaque proxy indépendant via la plateforme réseau d'anonymisation, le fragment complémentaire reçu dudit membre émetteur, à la pluralité N' des membres du réseau de confiance ; et

- recombiner, par chaque membre récepteur du réseau de confiance, la pluralité N de fragments complémentaires reçus afin de reconstruire le paquet de données initial.

L'invention peut être mise en œuvre selon des modes de réalisation alternatifs ou combinés, où :

- le procédé peut comprendre une étape initiale consistant à définir parmi la pluralité N' des membres du réseau de confiance, au moins trois membres récepteurs, et/ou à définir parmi la pluralité N de proxies indépendants, au moins deux proxies pour relayer la transmission des fragments complémentaires aux membres récepteurs.

- l'étape de générer une pluralité N de fragments complémentaires peut consister à appliquer une fonction de secret-partagé F() sur ledit paquet de données initial, et l'étape de recombiner la pluralité N de fragments complémentaires reçus consiste à appliquer la fonction de secret-partagé inverse F$^{-1}$() sur lesdits fragments complémentaires.

- la fonction de secret-partagé peut par exemple être une fonction XOR avec ou sans latence.

- l'étape de générer une pluralité N de fragments complémentaires peut consister à générer N-1 fragments aléatoires de longueur égale à la longueur du paquet de données initial, et où le dernier fragment N est un fragment complémentaire des précédents.

- l'étape initiale peut comprendre de plus une étape consistant à définir une fonction de secret-partagé F() pour un sous-ensemble de la pluralité N' des membres du réseau de confiance.

- l'étape de transmission par le membre émetteur des fragments complémentaires, peut également inclure, en même temps ou séquentiellement, la transmission à chaque proxy de la fonction de secret-partagé, ou peut inclure directement la fonction de réassemblage via les fragments complémentaires.

- le procédé peut comprendre de plus après l'étape de recombinaison, la mise en œuvre par au moins un membre récepteur du réseau de confiance, des étapes de générer, transmettre, retransmettre et recombiner du procédé de transmission anonyme, afin d'envoyer une réponse anonyme audit membre émetteur anonyme .

- l'étape de retransmission par les proxies, peut consister en ce qu'au moins deux proxies retransmettent leur fragment complémentaire reçu, à un sous-ensemble de la pluralité des membres récepteurs.

- l'étape de transmission aux proxies des fragments complémentaires, peut consister à transmettre, en plus des fragments complémentaires, des données ou des fragments aléatoires dénués de sens et reconnus comme du bruit au niveau applicatif.

- le procédé peut comprendre préalablement à l'étape de retransmission par les proxies des fragments complémentaires reçus, une étape de stockage par les proxies desdits fragments complémentaires reçus.

- l'étape de retransmission des fragments complémentaires par les proxies peut comprendre de plus une étape consistant pour chaque proxy à notifier la transmission du fragment complémentaire, à un membre du réseau de confiance en charge de l'accès à la plateforme réseau d'anonymisation, ladite notification pouvant être un message incluant des informations relatives à la performance de la transmission, notamment des informations relatives à la taille, au débit, à la nature mono ou bidirectionnelle du paquet de données.

- le procédé peut comprendre de plus après l'étape de recombinaison des fragments, une étape de génération d'une notation du paquet de données reçu.

- un, plusieurs ou tous les proxies peuvent être hébergés par un ou plusieurs membres du réseau de confiance.

L'invention concerne aussi un dispositif de transmission anonyme d'information, la transmission étant une communication point-à-multipoints ou une communication multipoints à multipoints entre des membres d'un même réseau de confiance, un réseau de confiance étant prédéfini par une pluralité de membres et une pluralité de proxies indépendants, la communication au sein d'un réseau de confiance s'effectuant sur une plateforme réseau d'anonymisation masquant les adresses IP des membres dudit réseau de confiance, le dispositif comprenant des moyens pour mettre en œuvre les étapes du procédé de l'invention.

L'invention concerne aussi un produit programme d'ordinateur qui comprend des instructions de code permettant d'effectuer les étapes du procédé de l'invention, lorsque le programme est exécuté sur un ordinateur.

Description des figures

D'autres caractéristiques et avantages de l'invention apparaîtront à l'aide de la description qui suit et des figures des dessins annexés dans lesquels :

[Fig.1] illustre de manière simplifiée un environnement permettant de mettre en œuvre la présente invention ;

[Fig.2] illustre un mode de réalisation d'une architecture de l'invention ;

[Fig.3] est un diagramme de flux du procédé de transmission anonyme de l'invention, dans un mode de réalisation monodirectionnel point à multipoints ;

[Fig.4a]

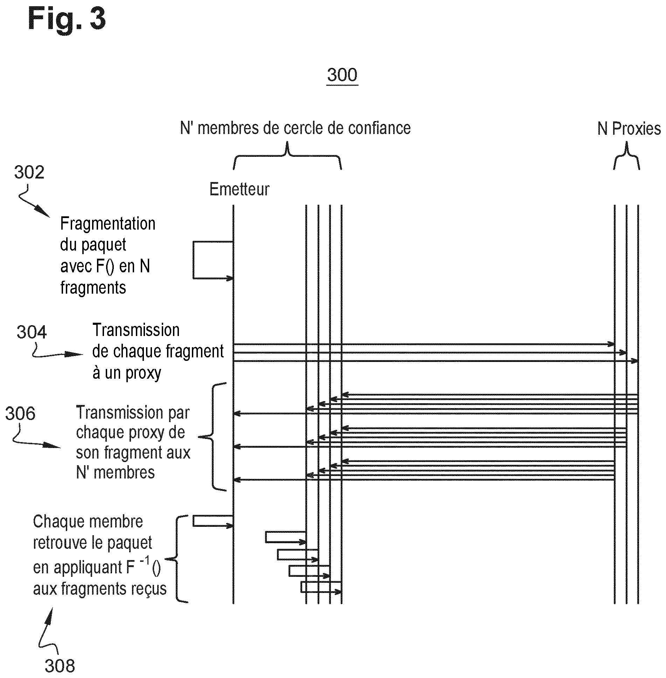

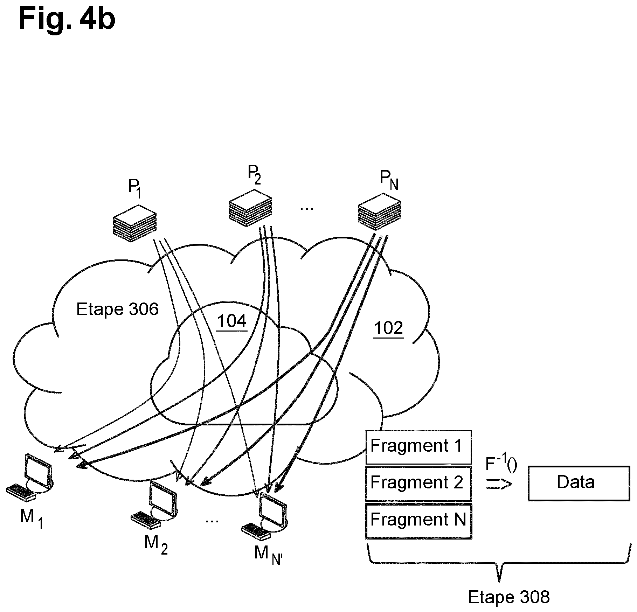

[Fig.4b] illustrent les étapes du procédé de transmission anonyme monodirectionnel du diagramme de flux de la figure 3 ;

[Fig.5a]

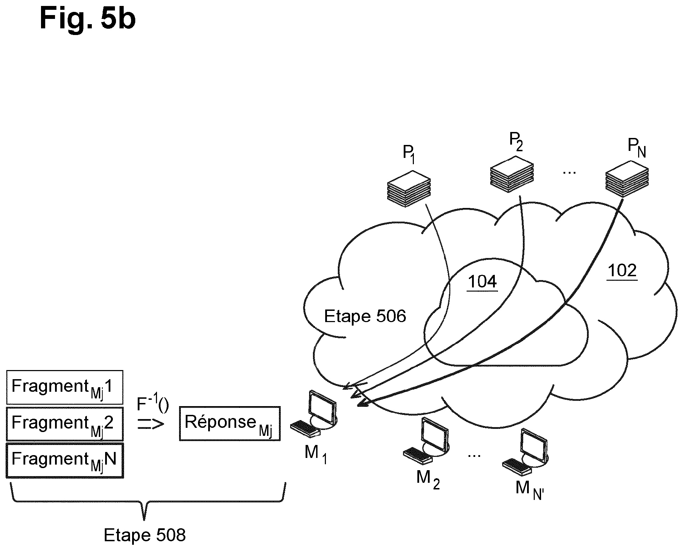

[Fig.5b] illustrent les étapes additionnelles du procédé d'échange anonyme bidirectionnel selon un mode de réalisation de l'invention ;

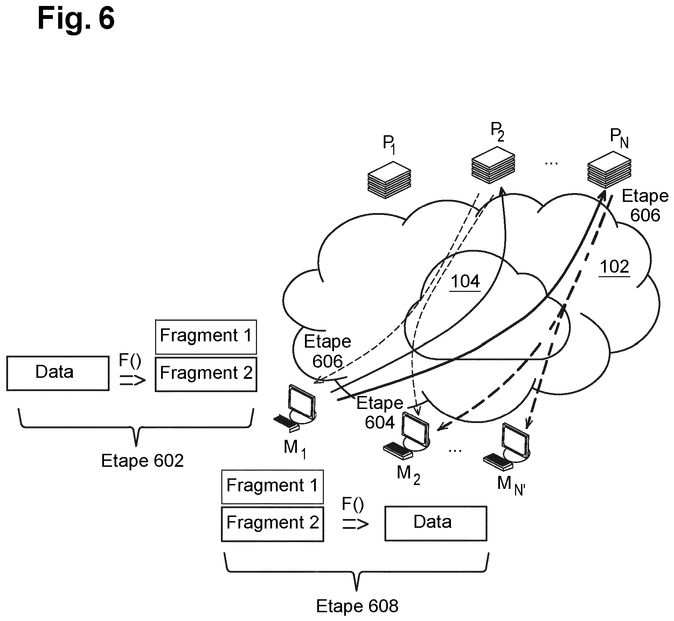

[Fig.6] illustre un mode de réalisation de l'invention dit « multi-cercles » ;

[Fig.7a]

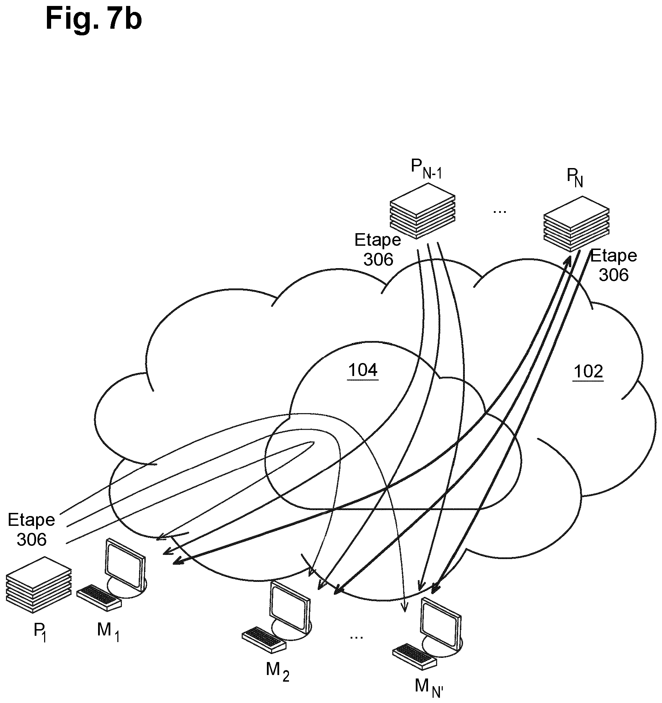

[Fig.7b] illustrent un mode de réalisation de l'invention dit « garantie ».

Description détaillée de l'invention

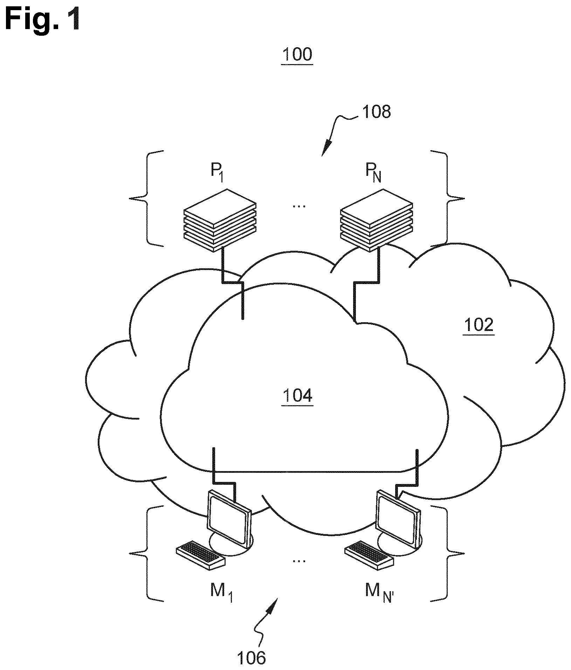

Le contexte 100 pour une mise en œuvre de l'invention est illustré de manière simplifiée sur la figure 1, comprenant un réseau de communication 102 sur lequel existe une solution d'anonymisation réseau 104. Dans un mode de réalisation, la solution d'anonymisation réseau 104 est un réseau d'anonymisation de couverture du réseau de communication traditionnel sous-jacent 102.

Avantageusement, la solution d'anonymisation 104 ne doit pas forcément présenter des propriétés très évoluées d'anonymisation. Néanmoins le niveau d'anonymat offert par l'invention est dépendant en partie de la robustesse de la solution d'anonymisation réseau. Ainsi, un simple service VPN d'anonymisation n'est pas conseillé, et l'homme du métier mettra l'invention en œuvre de manière privilégiée via des réseaux d'anonymisation tels que Tor, I2P ou de manière préférentielle selon une plateforme basée sur l'architecture de la demande de brevet précitée WO2019/072470A1 de la Demanderesse.

L'architecture pour la mise en œuvre du procédé de l'invention comprend aussi un réseau 106 de N' partenaires ($M_1$ à $M_{N'}$) souhaitant échanger des informations entre eux de manière anonyme, et un réservoir de N proxies indépendants 108 ($P_1$ à $P_N$).

Les proxies et les membres du réseau de confiance (i.e. les partenaires), disposent d'adresses réseaux (par exemple des adresses IP) du réseau traditionnel sous-jacent 102.

Les proxies sont chargés de relayer les informations d'un membre émetteur aux partenaires ou destinataires du réseau de confiance 104. Les proxies ne sont pas en mesure de savoir et de déterminer si les données qu'ils font transiter sont des données utiles ou non.

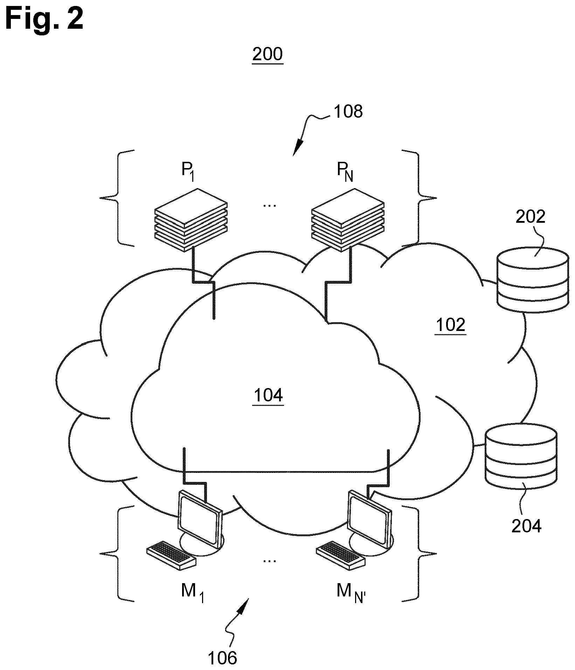

La figure 2 illustre une mise en œuvre 200 de l'invention dans le contexte 100 de la figure 1. Bien qu'un réseau de communication traditionnel 102 soit montré, ce dernier ne participe pas à la mise en œuvre du procédé de l'invention, où les communications se font uniquement au travers du réseau d'anonymisation 104.

Les composants impliqués pour l'implémentation de l'invention sont au moins:

- une solution d'anonymisation réseau 104, qui en pratique est un réseau overlay « au-dessus » du réseau classique 102 ;

- un réseau ou cercle de confiance (« Trust ring ») 106, composé d'une pluralité N' de membres $M_{N'}$ ou partenaires souhaitant échanger des informations entre eux de manière anonyme ;

- un réservoir 108 d'une pluralité N de proxies $P_N$, opérés par des acteurs indépendants, et chargés de relayer les informations d'un émetteur du réseau de confiance aux partenaires du réseau de confiance.

Optionnellement, une ou plusieurs bases de données (202, 204) peuvent être constituées, et agir comme registres des proxies, des partenaires, et définir l'appartenance de ces partenaires aux différents cercles de confiance (i.e.

sous-groupes du réseau de confiance initial).

Les bases de données (202, 204) sont contrôlées par tous les membres du réseau de confiance, qui peuvent donc les consulter, de manière sécurisée ou non, à tout moment, soit via le réseau d'anonymisation 104, soit directement via le réseau classique 102. En effet, tant le pool de proxies 108 que les membres du réseau de confiance 106 disposent d'adresses réseaux (par exemple des adresses IP) visibles de tous les éléments du réseau traditionnel sous-jacent 102.

Dans un mode de réalisation préférentiel de l'invention, les membres et les proxies communiquent entre eux de manière anonyme au travers du réseau d'anonymisation 104. Cependant, dans le cas d'une communication monodirectionnelle, la connexion des proxies vers les membres du réseau de confiance, peut être faite de manière non anonyme.

Ainsi, les partenaires du réseau de confiance 106 ont accès à tout moment à la liste des proxies, à la liste des autres partenaires et de l'appartenance de ces partenaires aux différents cercles de confiance éventuels (sous-groupes). La consultation de ces bases étant des plus communes pour l'homme du métier, celle-ci n'est pas détaillée dans la description.

Dans un mode de réalisation, les bases de données (202, 204) sont définies comme des tables de routage telles qu'illustrées sur les tables I, II, III ci-dessous.

Les sous-groupes (ou cercles de confiance) sont définis en amont entre les membres du groupe de confiance. Chaque membre choisit ensuite le (ou les) cercle de confiance auquel il veut envoyer des informations en sélectionnant les couples (proxies, groupes) pertinents selon les tables de routage prédéfinies.

Dans une réalisation pratique, l'utilisateur communique un identifiant de groupe visé à chaque proxy sélectionné.

La table I illustre la constitution générale de groupes $G_i$ (par accord entre les membres $M_i$ d'un réseau de confiance), avec pour chaque groupe, la liste des proxies $P_i$ et des membres du cercle de confiance $M_i$ qui font partie de ce groupe. A titre d'exemple, les membres $M_1$, $M_2$, $M_4$ appartiennent au groupe $G_1$, et ils peuvent relayer leurs informations par les proxies $P_1$, $P_2$ et $P_4$.

[Table 1]

Table I

| Global | | |
|---|---|---|
| **Groupes $G_i$** | **Proxies $P_i$** | **Membres $M_i$** |
| **G1** | $P_1\ P_2\ P_4$ | $M_1\ M_2\ M_4$ |
| **G2** | $P_2\ P_3\ P_4$ | $M_2\ M_3\ M_4$ |
| **G3** | $P_1\ P_2\ P_3$ | $M_1\ M_2\ M_3$ |
| **...** | ... | ... |

La table II illustre les paramètres d'appartenance à un groupe, de proxies correspondants, et de fonction de secret-partagée utilisée par un membre $M_1$ selon son appartenance à un groupe. Ainsi à titre d'exemple, lors des échanges dans le groupe $G_1$ (regroupant selon la table I les membres $M_1$, $M_2$, $M_4$, et les relais $P_1$, $P_2$, $P_4$), la fonction de secret-partagé utilisée par $M_1$ est la fonction XOR. Lors des échanges dans le groupe $G_3$, (regroupant selon la table I les membres $M_1$, $M_2$, $M_3$, et les relais $P_1$, $P_2$, $P_3$), la fonction de secret-partagé utilisée par $M_1$ est la fonction 'XOR avec latence'. Dans une réalisation de l'invention, la fonction de secret-partagé pourra être définie par les membres du groupe lors de leurs premiers échanges et modifiée au cours du temps, de manière périodique ou non.

[Table 2]

Table II

| $M_1$ | | |
|---|---|---|
| **Groupes** | **Proxies** | **Fonction F()** |
| **G1** | $P_1\ P_2\ P_4$ | XOR |
| **G3** | $P_1\ P_2\ P_3$ | XOR + latence |

(suite)

| M$_1$ | | |
|---|---|---|
| Groupes | Proxies | Fonction F() |
| ... | ... | ... |

La table III illustre une table de routage d'un proxy indiquant les paramètres de groupe $G_i$ et les membres appartenant au groupe respectif. Par exemple, le proxy $P_4$ va relayer une information émise par un membre du groupe G2 vers l'ensemble des membres de ce groupe, i.e. $M_2$, $M_3$ et $M_4$.

[Table 3]

Table III

| Groupes | Membres |
|---|---|
| G1 | $M_1$ $M_2$ $M_4$ |
| G2 | $M_2$ $M_3$ $M_4$ |
| ... | ... |

La figure 3 montre un diagramme de flux 300 du procédé de transmission anonyme de l'invention, dans un mode de réalisation monodirectionnel point à multipoints. Le procédé débute quand un membre, par exemple 'M$_1$', d'un cercle de confiance $\{M_1, M_2, ..., M_N\}$ souhaite transmettre de manière anonyme aux membres du cercle, une information « Data ». Le réseau de confiance de partenaires 206 est composé d'au moins trois membres (N'$\geq$3).

Dans la suite de la description, pour des raisons de simplification, les termes 'membres', 'partenaires', 'émetteur' désignent des entités physiques et/ou des moyens matériels et logiciels configurés pour ces entités physiques pour mettre en œuvre toute fonction permettant entre autre de fragmenter, transmettre, recevoir, reconstruire des données via le réseau d'anonymisation, selon les étapes du procédé de l'invention.

Dans une première étape 302, le procédé permet à l'émetteur de fragmenter l'information à transmettre en une pluralité N de fragments, puis dans une étape suivante 304, le procédé permet à l'émetteur de transmettre chaque fragment $N_i$ généré à un proxy $P_i$ du réservoir de proxies.

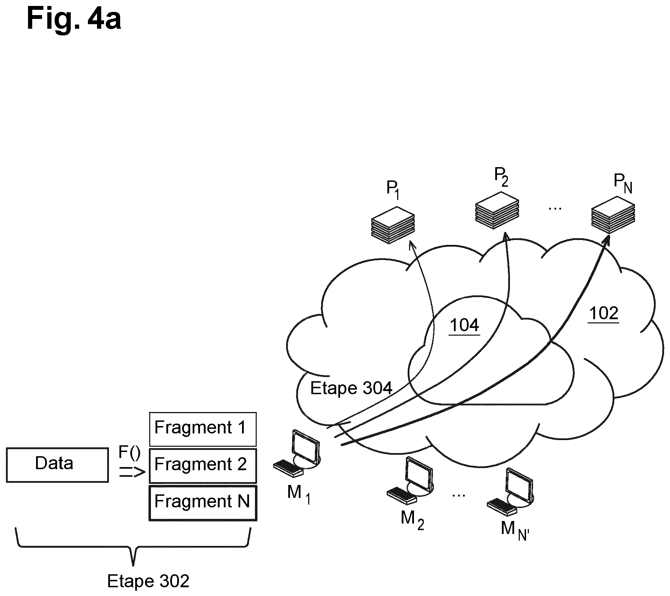

La figure 4a illustre les étapes 302 et 304 du procédé de transmission anonyme monodirectionnel du diagramme de flux de la figure 3, sur l'exemple de l'architecture de la figure 2.

Ainsi, à l'étape 302, à partir d'un paquet « Data », l'émetteur $M_1$ génère N fragments complémentaires (Fragment 1, Fragment 2, ... Fragment N) au travers d'une fonction de secret-partagé F(), de telle façon que la recombinaison de ces N fragments complémentaires permette de retrouver le paquet initial « Data », et pouvant s'énoncer selon l'équation suivante :

$$F^{-1}(\{\text{fragment complémentaire}_i\}_{i=1..N}) = \text{Data}) .$$

Dans un mode de réalisation, l'émetteur définit les destinataires ou un groupe de confiance, de l'information à recevoir.

Dans un mode de réalisation, la fonction de secret-partagé F() peut-être un XOR ($\oplus$). L'émetteur $M_1$ génère N-1 fragments aléatoires de longueur égale à la longueur du paquet « Data », et tel que le dernier fragment soit complémentaire et égal à :

$$fragment_N = \left( \overset{\oplus}{\underset{i=1,...,N-1}{}} fragment\ aléatoire_i \right) \oplus \text{Data} .$$

A l'étape suivante 304, l'émetteur $M_1$ transmet via la plateforme réseau d'anonymisation 104 chaque fragment à un proxy différent. Ainsi, il transmet le premier fragment 'Fragment 1' à un premier proxy, par exemple $P_1$, au travers d'une connexion anonyme $M_1$-$P_1$ ; il transmet le deuxième fragment 'Fragment 2' à un deuxième proxy, par exemple $P_2$, au travers d'une connexion anonyme $M_1$-$P_2$ ; etc jusqu'au dernier fragment 'Fragment N' transmis à un Nième proxy, par exemple $P_N$, au travers d'une connexion anonyme $M_1$-$P_N$.

Il est à noter que la connexion anonyme $M_1$-$P_i$ établie pour transmettre un fragment vers un proxy $P_i$ peut être établie uniquement pendant le délai de la transmission du fragment de l'émetteur vers le proxy, ou alors être maintenue si une réponse est attendue de la part des proxies Pi.

Ainsi, l'étape 304 permet que chaque proxy $P_i$ reçoive un bruit aléatoire (i.e. un fragment) de la part d'un membre inconnu du réseau de confiance.

Selon des variantes de réalisation, le nombre de proxies peut être prédéfini ou être défini par l'émetteur avant l'envoi d'une information.

Le nombre de proxies constituant le réservoir de proxies 108 est d'au moins deux proxies ($N \geq 2$).

Le procédé poursuit par une étape 306 dans laquelle chaque proxy qui a reçu un fragment complémentaire, retransmet via la plateforme réseau d'anonymisation, ce fragment à l'ensemble des membres du réseau de confiance (ou à l'ensemble des membres d'un sous-groupe de réseau de confiance), puis par une étape 308 où chaque membre qui a reçu une pluralité de fragments, reconstitue le paquet « Data » grâce à la fonction inverse de secret-partagé $F^{-1}$().

Selon des variantes de réalisation, la fonction de secret-partagé F() peut être prédéfinie pour un cercle de confiance et donc connue de chaque membre du groupe ; elle peut être définie par l'émetteur et transmise via les proxies avec les fragments complémentaires, et relayée aux destinataires à l'étape de retransmission 306 ; elle peut aussi être définie selon l'application pour laquelle le procédé de l'invention est mis en œuvre.

Ainsi, l'homme du métier, au-delà de l'exemple indiqué d'une fonction XOR, peut implémenter toute autre fonction permettant d'établir une fonctionnalité de secret-partagé entre partenaires.

La figure 4b illustre les étapes 306 et 308 du procédé de transmission anonyme monodirectionnel du diagramme de flux de la figure 3, sur l'exemple de l'architecture de la figure 2.

Ainsi, à l'étape 306, chaque proxy Pi relaie et retransmet à l'ensemble des partenaires du réseau de confiance $\{Mi\}_{i=1,...,N}$, le fragment complémentaire 'Fragment$_i$' qu'il a reçu de l'émetteur M1, au travers d'une connexion anonyme $M_1$-Pi préalablement établie.

Il est à noter que la connexion anonyme $P_i$-$M_i$ établie pour retransmettre un fragment d'un proxy $P_i$ vers un destinataire $M_i$ peut être établie uniquement pendant le délai de la transmission du fragment du proxy vers ce destinataire, ou alors être maintenue si une réponse est attendue de la part des membres du cercle de confiance {Mi}.

Quand les membres du cercle de confiance ont reçu les fragments envoyés par les proxies, le procédé permet à l'étape 308, que chaque membre du réseau Mi recombine l'ensemble des fragments complémentaires relayés par le pool des proxies {Pi}, au travers de la fonction inverse de secret-partagé $F^{-1}$(), et ainsi obtenir le paquet initial « Data » de l'information que l'émetteur souhaite partagée.

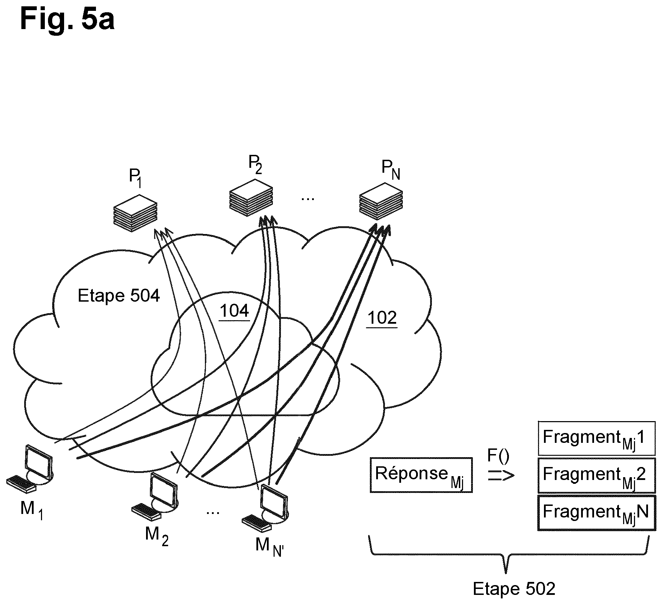

Des variantes de réalisation du procédé d'échange d'information de l'invention sont décrites selon les figures 5 à 7.

Dans une variante de réalisation, le procédé de l'invention est mis en œuvre pour une transmission bidirectionnelle entre un émetteur $M_1$ et l'ensemble des membres {$M_i$} d'un cercle de confiance dont fait partie l'émetteur, et impliquant une réponse de chacun des $M_i$. Une telle situation peut par exemple être dans le cas où l'information « Data » est une requête d'interrogation sur une base de données BDD$_i$ particulière qui est hébergée par chaque $M_i$.

Le procédé pour cette variante comprend les étapes de transmission anonyme 302 à 308 précédemment décrites depuis un émetteur $M_1$. Dans cette variante, les connexions anonymes $M_1$-$P_i$ établies pour transmettre un fragment vers un proxy $P_i$, et les connexions anonymes $P_i$-$M_j$ établies pour retransmettre un fragment d'un proxy $P_i$ vers un destinataire $M_j$ sont maintenues.

Le procédé 300 comprend de plus des étapes où chaque membre du cercle de confiance qui a reçu la requête d'un émetteur qui lui est inconnu, va mettre en œuvre les mêmes mécanismes de transmission anonyme du procédé de l'invention, pour envoyer à son tour de manière anonyme une réponse à l'émetteur anonyme.

Ainsi, un membre qui envoie une information de type « Réponse » devient un émetteur au sens du procédé 300 de l'invention.

Les figures 5a et 5b illustrent l'enchainement des étapes du procédé d'échange anonyme bidirectionnel selon un mode de réalisation de l'invention.

Un partenaire $M_j$ d'un groupe ayant reçu après recomposition d'un paquet, une requête appelant une réponse, met en œuvre le procédé de transmission anonyme. Il décompose dans une étape 502, par application de la fonction de secret-partagé F(), son paquet de données « Réponse » en une pluralité N de fragments complémentaires (Fragment$_{Mj}$1, Fragment$_{MJ}$2, ..., Fragment$_{MJ}$N) correspondant au nombre de proxies, puis transmet dans une étape 504 chaque fragment de cette réponse vers chaque proxy, au travers de la connexion anonyme Pi-Mj qui a été précédemment établie par le proxy $P_i$ avec le membre $M_j$ et qui a été maintenue.

Dans une étape suivante 506, chaque proxy retransmet le fragment reçu vers le membre destinataire $M_1$ au travers de la connexion anonyme $M_1$-Pi précédemment établie et qui a été maintenue. Puis, dans une étape suivante 508 qui est fonctionnellement similaire à l'étape 308, le membre destinataire $M_1$ applique la fonction inverse de secret-partagé $F^{-1}$() sur la pluralité de fragments Mj, pour reconstruire le paquet « Réponse » envoyé par le membre $M_j$ du cercle de

confiance, qui lui reste inconnu.

Dans le cas où des transmissions ou des échanges simultanés pourraient intervenir au sein du réseau de confiance, l'émetteur M1 peut associer aux fragments complémentaires i un identifiant commun qu'il aura généré, et permettre ainsi aux destinataires Mi d'associer les bons fragments entre eux.

Dans une variante de réalisation de l'invention, la retransmission par les $P_i$ proxies du fragment i au pool de destinataires {Mi}, peut se faire directement sans passer par le réseau d'anonymisation. Cependant, dans un tel cas, et aussi dans le cas où la transmission impliquerait également une réponse par chaque Mi, afin de garantir l'anonymat de la réponse, il est nécessaire que le niveau applicatif commande que la transmission de ces réponses suive le principe de l'invention (i.e. les étapes 302 à 308). Cette procédure est recommandée afin d'éviter une analyse potentielle de son contenu, typiquement une lecture de la taille de la réponse dans le cas où des techniques de « traffic flow confidentiality », comme le « padding » par exemple, ne pourraient pas être mises en œuvre.

Une variante de l'invention dite variante « multi-cercles », est illustrée sur la figure 6. Dans ce mode de réalisation, un ou plusieurs ou tous les proxies disposent de règles de retransmission différentes, c'est-à-dire, que chacun envoie le fragment qu'il a reçu d'un émetteur $M_1$ à un sous-ensemble des membres {Mi} du cercle de confiance, qui est propre à cet émetteur (sous-ensemble$_j$ de {Mi}). Les règles de retransmission peuvent être préétablies par les membres du cercle de confiance. Elles peuvent être centralisées dans la base de données des membres 204 et des proxies 202.

Ainsi, un émetteur $M_1$ peut ainsi décider d'envoyer un paquet « Data » qu'à un sous-ensemble choisi de destinataires de telle façon que les membres récepteurs de ce sous-ensemble ne soient composés que de l'ensemble des membres qui sont à l'intersection des sous-ensembles des proxies choisis. Les membres en-dehors de cette intersection mais qui sont compris dans certains sous-ensembles, ne vont alors pas recevoir l'intégralité des fragments, et ne seront donc pas en mesure de retrouver le paquet initial « Data ».

Ainsi avantageusement, plusieurs cercles de confiance peuvent être créés, comme illustré sur la figure 6 où l'émetteur $M_1$ choisit de transmettre un paquet de données « Data » sur deux fragments complémentaires (Fragment1, Fragment2), relayés par deux proxies $P_2$ et $P_N$ (étapes 602, 604).

Selon le procédé de transmission anonymisé de l'invention, les proxies $P_2$ et $P_N$, retransmettent chacun à un sous-ensemble différent de destinataires les fragments reçus. Ainsi le proxy $P_2$ retransmet le fragment Fragment1 aux destinataires $M_1$ et $M_2$, le proxy $P_N$ retransmet le fragment Fragment2 aux destinataires $M_2$ et $M_N$. Il ressort que $M_2$ étant le seul à recevoir les deux fragments complémentaires (Fragment1, Fragment2), il est donc le seul à pouvoir les recombiner, selon les principes d'application de la fonction inverse de secret-partagé, et ainsi accéder à l'information « Data ».

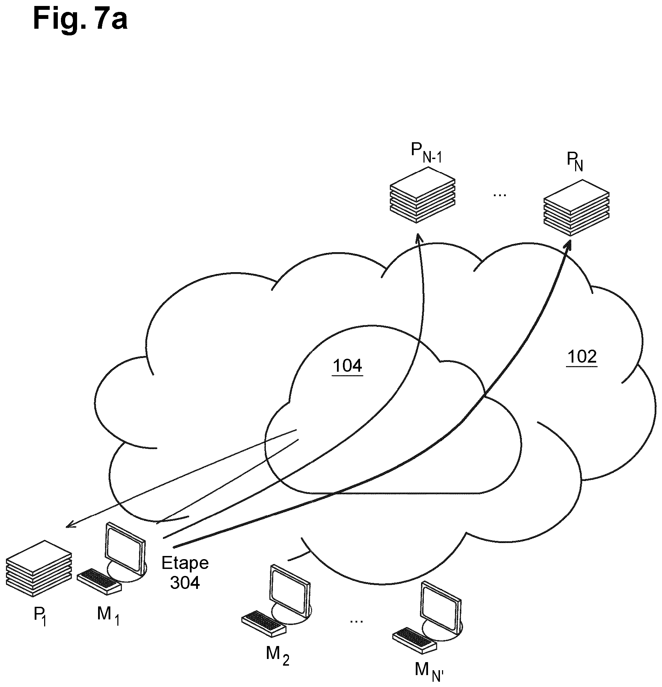

Une variante de l'invention dite variante « Garantie », est illustrée sur les figures 7a et 7b. Dans ce mode de réalisation, un ou plusieurs ou tous les proxies peuvent être hébergés par un ou plusieurs des partenaires du réseau de confiance. La figure 7a illustre plus spécifiquement l'étape 304 du procédé de l'invention où l'émetteur envoie les fragments complémentaires du paquet de données vers tous les proxies dont celui qu'il héberge et contrôle, et la figure 7b illustre plus spécifiquement l'étape 306 du procédé de l'invention où chaque proxy, dont celui hébergé par l'émetteur $M_1$, retransmet le fragment reçu vers les membres du cercle de confiance.

Dans cette configuration, les partenaires qui disposent d'un proxy ont une garantie, lorsqu'ils émettent ou qu'ils reçoivent une information transitant par le proxy qu'ils contrôlent, que nul, en dehors du groupe de destinataires identifié par l'émetteur, n'est en mesure d'accéder à (ou de modifier) l'information « Data », et ce même en cas de collusion de l'ensemble des autres membres (ou proxies) du réseau de confiance.

Une autre variante de l'invention dite variante « Protection externe », consiste en ce qu'un, ou plusieurs, ou tous les partenaires du cercle de confiance, génèrent du « bruit », c'est-à-dire envoient des données non-utiles ou des fragments aléatoires dénués de sens, afin de noyer les données utiles (les fragments complémentaires d'un paquet « Data » ou « Réponse ») dans un trafic plus large. Ces données ou fragments inutiles sont reconnus comme du bruit par le niveau applicatif. Avantageusement, ceci permet d'empêcher les proxies ou un observateur extérieur qui analyserait les flux réseau et les proxies, de savoir si les données qui transitent sont des données utiles ou non.

Un tel bruit peut être généré au moins de deux manières. Dans une première approche, le bruit peut être généré au niveau applicatif, c'est-à-dire au niveau des paquets « Data » et donc avant la fragmentation par la fonction de secret-partagé F(). Cela se fait en générant un contenu, aléatoire ou non, qui est marqué par le protocole et avant fragmentation comme contenu non-utile (par exemple via un bit particulier dans l'entête du protocole). Dans une autre approche, le bruit peut être généré au niveau du protocole du réseau de confiance. Cela se fait en générant, de manière aléatoire ou non, et en les envoyant, un nombre de fragments inférieurs au nombre N de proxies ou au nombre de proxies requis pour le cercle de confiance considéré (i.e. sous-ensemble$_j$ de {Mi}). Cette génération peut être pseudo aléatoire ou être effectuée à partir de dispositifs intelligents se basant sur le flux d'échanges actuel, en réaction à une évolution du flux par rapport aux flux de trafic tant totaux qu'utiles.

Une autre variante de l'invention dite variante « Boite aux lettres », consiste en ce qu'un ou plusieurs ou tous les partenaires du cercle de confiance, peuvent choisir d'interroger les proxies auxquels ils ont accès afin de récupérer tous les fragments auxquels ils ont le droit d'avoir accès. Dans cette configuration, les messages ne sont pas automatiquement relayés par les proxies. Ce mode peut également être utilisé à la reprise d'une connexion.

Une autre variante de l'invention dite variante « Stockage » consiste en ce qu'un ou plusieurs ou tous les proxies peuvent stocker les fragments qu'ils relaient. Ces fragments restent alors accessibles aux partenaires autorisés.

Une autre variante de l'invention dite variante « Paiement » consiste en ce que le procédé de l'invention est établi entre l'ensemble des membres d'un réseau de confiance et un membre particulier qui est en charge de l'accès au réseau. Dans cette configuration, à chaque transmission de flux, les proxies relaient l'information à tous les membres du réseau de confiance (comme détaillé par le procédé de la présente invention) avec un message particulier notifiant le transfert de données au membre particulier en charge de l'accès au réseau, ce message pouvant inclure des informations relatives à la performance de ce transfert, comme par exemple, des informations relatives à la taille, au débit, à la nature mono ou bidirectionnelle du paquet, etc. Ce message particulier peut par exemple être composé de l'entête du message utile avec un bruit aléatoire à la place du fragment, ceci évite que les proxies envoient des messages particuliers indus.

Avantageusement, cette variante permet de définir une manière de déduire le coût sur objectif de l'utilisation de la plateforme d'anonymisation pour l'ensemble du réseau de confiance. A partir de cela, une facture peut être émise à l'ensemble des membres du réseau de confiance, le réseau de confiance ayant la charge de définir une méthode de répartition de cette charge, par exemple une division du montant de la facture par le nombre de membres du réseau de confiance.

Une autre variante de l'invention dite variante « Reward » consiste en ce que les échanges soient notés par l'ensemble des récepteurs de l'information, sur une base qui est définie par chacun des réseaux de confiance. Avantageusement, une telle notation permet de rémunérer les partenaires apportant des informations jugées utiles à la plateforme. La rémunération peut être déléguée aux différents proxies. La rémunération peut éventuellement être basée sur un système de crypto monnaie.

L'homme du métier comprend que les différentes variantes de l'invention - « Garantie », « Multi-cercles », « Protection externe », « Boite aux lettres », « Stockage », « Paiement » et « Reward » - peuvent être combinées entre elles pour offrir l'ensemble du spectre de propriétés additionnelles de manière flexible.

Il a ainsi été décrit un procédé de communication, dit « multicast anonyme », et des variantes dérivées, qui offrent de nombreux avantages qui sont :

- de permettre aux partenaires de bâtir un réseau de confiance dans lequel ces partenaires peuvent transmettre (communication unidirectionnelle) ou échanger (communication bidirectionnelle) entre eux des informations de manière anonyme ;

- que la transmission ou l'échange est fait sans tiers de confiance susceptible de casser l'anonymat et/ou d'accéder (ou modifier) au contenu de la transmission ou de l'échange ;

- de bâtir un réseau de confiance composé d'un ou d'une pluralité de cercles de confiance différents ;

- de permettre à un émetteur ou initiateur d'un échange d'être le seul à contrôler le niveau de confiance utilisé ;

- d'offrir à un ou à une pluralité de membres du réseau, une garantie leur permettant de vérifier que les informations ont été effectivement diffusées aux seuls membres du réseau tout en préservant l'anonymat de l'émetteur ;

- de permettre à un émetteur mais aussi à chacun des récepteurs d'un cercle de confiance choisi, d'être en mesure de pouvoir vérifier par soi-même que le contenu de l'information n'a pas pu être intercepté ou modifié par un tiers, et qu'il n'y a pas pu y avoir de collusion des autres membres du réseau contre lui. Ceci offre la garantie que les autres membres du réseau n'ont pas pu reconstruire un tiers de confiance ;

- de garantir que lors d'une transmission, seuls les membres du groupe de partenaires seront destinataires de l'information et que, par conséquent, aucun tiers extérieur au groupe n'est en mesure d'accéder à cette information. Ceci implique qu'il n'existe pas de tiers de confiance susceptible de briser l'anonymat de l'émetteur d'une information donnée, et d'accéder ou modifier cette information indépendamment du niveau de protection (typiquement chiffrement) intrinsèque de cette information.

- d'empêcher les proxies et des tiers extérieurs au réseau de savoir si un contenu utile est envoyé ou récupéré par l'un des membres du réseau.

- de permettre au(x) récepteur(s) de qualifier l'information par un « degré de confiance » alors que son expéditeur est (et doit rester) inconnu. Ce degré de confiance est déduit par le récepteur par analyse des proxies qui lui ont relayé l'information définissant ce cercle de confiance ;

- de permettre aux membres d'un cercle de confiance d'être en mesure de manière individuelle d'obtenir cette garantie, c'est-à-dire qu'un membre n'a pas besoin d'avoir confiance en les autres membres, pour bénéficier de cette garantie.

**Revendications**

1. Procédé (300) de transmission anonyme d'information, la transmission étant une communication point-à-multipoints ou une communication multipoints à multipoints entre des membres d'un même réseau de confiance, un réseau de confiance étant prédéfini par une pluralité de membres et une pluralité de proxies indépendants, la communication au sein d'un réseau de confiance s'effectuant sur une plateforme réseau d'anonymisation (104) masquant les adresses IP des membres dudit réseau de confiance, le procédé étant mis en œuvre par ordinateur et comprenant des étapes consistant à :

   - générer (302), par un membre d'un réseau de confiance comprenant N' membres et N proxies, une pluralité N de fragments complémentaires de données à partir d'un paquet de données initial, tel que la recombinaison des N fragments complémentaires permet de reconstruire le paquet de données initial ;
   - transmettre (304), par ledit membre émetteur via la plateforme réseau d'anonymisation, chaque fragment complémentaire généré, respectivement à un proxy indépendant parmi les N proxies ;
   - retransmettre (306), par chaque proxy indépendant via la plateforme réseau d'anonymisation, le fragment complémentaire reçu dudit membre émetteur à la pluralité N' des membres du réseau de confiance ; et
   - recombiner (308) par chaque membre récepteur du réseau de confiance, la pluralité N de fragments complémentaires reçus afin de reconstruire le paquet de données initial.

2. Le procédé selon la revendication 1 comprenant une étape initiale consistant à définir parmi la pluralité N' des membres du réseau de confiance, au moins trois membres récepteurs, et/ou à définir parmi la pluralité N de proxies indépendants, au moins deux proxies pour relayer la transmission des fragments complémentaires aux membres récepteurs.

3. Le procédé selon la revendication 1 ou 2 dans lequel l'étape de générer une pluralité N de fragments complémentaires consiste à appliquer une fonction de secret-partagé F() sur ledit paquet de données initial, et l'étape de recombiner la pluralité N de fragments complémentaires reçus consiste à appliquer la fonction de secret-partagé inverse $F^{-1}()$ sur lesdits fragments complémentaires.

4. Le procédé selon la revendication 3 dans lequel la fonction de secret-partagé est une fonction XOR avec ou sans latence.

5. Le procédé selon la revendication 4 dans lequel l'étape de générer une pluralité N de fragments complémentaires consiste à générer N-1 fragments aléatoires de longueur égale à la longueur du paquet de données initial, et où le dernier fragment N est un fragment complémentaire des précédents.

6. Le procédé selon l'une quelconque des revendications 2 à 5 dans lequel l'étape initiale comprend de plus une étape consistant à définir une fonction de secret-partagé F() pour un sous-ensemble de la pluralité N' des membres du réseau de confiance.

7. Le procédé selon la revendication 6 dans lequel l'étape de transmission par ledit membre émetteur des fragments complémentaires, comprend en même temps ou séquentiellement la transmission à chaque proxy de la fonction de secret-partagé, ou, comprend directement la fonction de réassemblage, via les fragments complémentaires.

8. Le procédé selon l'une quelconque des revendications 1 à 7 comprenant de plus après l'étape de recombinaison, la mise en œuvre par au moins un membre récepteur du réseau de confiance, des étapes de générer (302), transmettre (304), retransmettre (306) et recombiner (308) de la revendication 1, afin d'envoyer une réponse anonyme audit membre émetteur anonyme.

9. Le procédé selon l'une quelconque des revendications 1 à 8 dans lequel l'étape de retransmission par les proxies, consiste en ce qu'au moins deux proxies retransmettent leur fragment complémentaire reçu, à un sous-ensemble de la pluralité des membres récepteurs.

10. Le procédé selon l'une quelconque des revendications 1 à 9 dans lequel l'étape de transmission aux proxies des fragments complémentaires, consiste à transmettre, en plus des fragments complémentaires, des données ou des fragments aléatoires dénués de sens et reconnus comme du bruit au niveau applicatif.

11. Le procédé selon l'une quelconque des revendications 1 à 10 comprenant de plus avant l'étape de retransmission par les proxies des fragments complémentaires reçus, une étape de stockage par les proxies desdits fragments complémentaires reçus .

12. Le procédé selon l'une quelconque des revendications 1 à 11 dans lequel l'étape de retransmission des fragments complémentaires par les proxies comprend de plus une étape consistant par chaque proxy à notifier la transmission du fragment complémentaire, à un membre du réseau de confiance en charge de l'accès à la plateforme réseau d'anonymisation, ladite notification pouvant être un message incluant des informations relatives à la performance de la transmission, notamment des informations relatives à la taille, au débit, à la nature mono ou bidirectionnelle du paquet de données.

13. Le procédé selon l'une quelconque des revendications 1 à 12 comprenant de plus après l'étape de recombinaison des fragments, une étape de génération d'une notation du paquet de données reçu.

14. Le procédé selon l'une quelconque des revendications 1 à 13 dans lequel un, plusieurs ou tous les proxies sont hébergés par un ou plusieurs des membres du réseau de confiance.

15. Un produit programme d'ordinateur, ledit programme d'ordinateur comprenant des instructions de code permettant d'effectuer les étapes du procédé selon l'une quelconque des revendications 1 à 14, lorsque ledit programme est exécuté sur un ordinateur.

16. Un dispositif de transmission anonyme d'information, la transmission étant une communication point-à-multipoints ou une communication multipoints à multipoints entre des membres d'un même réseau de confiance, un réseau de confiance étant prédéfini par une pluralité de membres et une pluralité de proxies indépendants, la communication au sein d'un réseau de confiance s'effectuant sur une plateforme réseau d'anonymisation (104) masquant les adresses IP des membres dudit réseau de confiance, le dispositif comprenant des moyens pour mettre en œuvre les étapes du procédé selon l'une quelconque des revendications 1 à 14.

**Patentansprüche**

1. Verfahren (300) zur anonymem Übertragung von Informationen, wobei die Übertragung eine Punkt-zu-Mehrpunkt-Kommunikation oder eine Mehrpunkt-zu-Mehrpunkt-Kommunikation zwischen den Elementen eines gleichen vertrauenswürdigen Netzwerks ist, wobei ein vertrauenswürdiges Netzwerk durch eine Vielzahl von Elementen und eine Vielzahl unabhängiger Proxies vordefiniert ist, wobei die Kommunikation in einem vertrauenswürdigen Netzwerk auf einer Anonymisierungsnetzwerkplattform (104) stattfindet, die die IP-Adressen der Elemente des vertrauenswürdigen Netzwerks maskiert, wobei das Verfahren durch einen Computer durchgeführt wird und die Schritte umfasst, bestehend aus:

- Erzeugen (302) einer Vielzahl N von komplementären Datenfragmenten ausgehend von einem anfänglichen Datenpaket durch ein Element des vertrauenswürdigen Netzwerks, das N' Elemente und N Proxies umfasst, sodass die Rekombination der N komplementären Fragmente erlaubt, das anfängliche Datenpaket zu rekonstruieren;
- Übertragen (304) von jedem erzeugten komplementären Fragment, jeweils an einen unabhängigen Proxy unter den N Proxies, durch das Senderelement über die Anonymisierungsnetzwerkplattform;
- Weiterleiten (306) des von dem Senderelement empfangenen komplementären Fragments an die Vielzahl N' der Elemente des vertrauenswürdigen Netzwerks durch jeden unabhängigen Proxy über die Anonymisierungsnetzwerkplattform; und
- Rekombinieren (308) der Vielzahl N von empfangenen komplementären Fragmenten durch jedes Empfängerelement des vertrauenswürdigen Netzwerks, um das anfängliche Datenpaket zu rekonstruieren.

2. Verfahren nach Anspruch 1, umfassend einen anfänglichen Schritt, der aus dem Definieren von mindestens drei Empfängerelementen unter der Vielzahl N' von Elementen des vertrauenswürdigen Netzwerks, und/oder aus dem Definieren von mindestens zwei Proxies unter der Vielzahl N von unabhängigen Proxies besteht, um die Übertragung von komplementären Fragmenten an die Empfängerelemente zu übermitteln.

**3.** Verfahren nach Anspruch 1 oder 2, wobei der Schritt des Erzeugens einer Vielzahl N von komplementären Fragmenten aus dem Anwenden einer Geheimteilungsfunktion F() auf das anfängliche Datenpaket besteht, und der Schritt des Rekombinierens der Vielzahl N von empfangenen komplementären Fragmenten aus dem Anwenden der inversen Geheimteilungsfunktion $F^{-1}$ () auf die komplementären Fragmente besteht.

**4.** Verfahren nach Anspruch 3, wobei die Geheimteilungsfunktion eine XOR-Funktion mit oder ohne Latenz ist.

**5.** Verfahren nach Anspruch 4, wobei der Schritt des Erzeugens einer Vielzahl N von komplementären Fragmenten aus dem Erzeugen von N-1 zufälligen Fragmenten gleicher Länge wie die Länge des anfänglichen Datenpakets besteht, und wobei das letzte Fragment N ein komplementäres Fragment der vorhergehenden ist.

**6.** Verfahren nach einem der Ansprüche 2 bis 5, wobei der anfängliche Schritt zusätzlich einen Schritt umfasst, der aus dem Definieren einer Geheimteilungsfunktion F () für eine Untergruppe der Vielzahl N' der Elemente des vertrauenswürdigen Netzwerks besteht.

**7.** Verfahren nach Anspruch 6, wobei der Schritt der Übertragung von komplementären Fragmenten durch das Senderelement zur gleichen Zeit oder sequentiell die Übertragung an jeden Proxy der Geheimteilungsfunktion umfasst oder direkt die Wiederzusammensetzungsfunktion über die komplementären Fragmente umfasst.

**8.** Verfahren nach einem der Ansprüche 1 bis 7, umfassend zusätzlich, nach dem Schritt der Rekombination, das Durchführen von Schritten zum Erzeugen (302), Übertragen (304), Weiterleiten (306) und Rekombinieren (308) nach Anspruch 1 durch mindestens ein Empfängerelement des vertrauenswürdigen Netzwerks, um eine anonyme Antwort an das anonyme Senderelement zu senden.

**9.** Verfahren nach einem der Ansprüche 1 bis 8, wobei der Schritt der Weiterleitung durch die Proxies daraus besteht, dass mindestens zwei Proxies ihre empfangenen komplementären Fragmente an eine Untergruppe der Vielzahl von Empfängerelementen weiterleiten.

**10.** Verfahren nach einem der Ansprüche 1 bis 9, wobei der Schritt der Übertragung von komplementären Fragmenten an die Proxies aus dem Übertragen von Daten oder von zufälligen, sinnlosen und auf dem Anwendungsniveau als Rauschen erkannten Fragmenten zusätzlich zu den komplementären Fragmenten besteht.

**11.** Verfahren nach einem der Ansprüche 1 bis 10, zusätzlich umfassend, vor dem Schritt der Weiterleitung von empfangenen komplementären Fragmenten durch die Proxies, einen Schritt des Speicherns von den empfangenen komplementären Fragmenten durch die Proxies.

**12.** Verfahren nach einem der Ansprüche 1 bis 11, wobei der Schritt der Weiterleitung von komplementären Fragmenten durch die Proxies zusätzlich einen Schritt umfasst, der aus dem Melden der Übertragung des komplementären Fragments durch jeden Proxy an ein Element des vertrauenswürdigen Netzwerks besteht, das für den Zugang auf die Anonymisierungsnetzwerkplattform zuständig ist, wobei die Meldung eine Benachrichtigung sein kann, die Informationen in Bezug auf die Leistung der Übertragung, insbesondere Informationen in Bezug auf die Größe, die Übertragungsgeschwindigkeit, die mono- oder bidirektionale Art des Datenpakets einschließt.

**13.** Verfahren nach einem der Ansprüche 1 bis 12, zusätzlich umfassend, nach dem Schritt der Rekombination der Fragmente, einen Schritt der Erzeugung einer Bewertung des empfangenen Datenpakets.

**14.** Verfahren nach einem der Ansprüche 1 bis 13, wobei ein, mehrere oder alle der Proxies von einem oder mehreren der Elemente des vertrauenswürdigen Netzwerks beherbergt werden.

**15.** Computerprogrammprodukt, wobei das Computerprogrammprodukt Codeanweisungen umfasst, die erlauben, die Schritte des Verfahrens nach einem der Ansprüche 1 bis 14 durchzuführen, wenn das Programm durch einen Computer ausgeführt wird.

**16.** Vorrichtung zur anonymem Übertragung von Informationen, wobei die Übertragung eine Punkt-zu-Mehrpunkt-Kommunikation oder eine Mehrpunkt-zu-Mehrpunkt-Kommunikation zwischen den Elementen eines gleichen vertrauenswürdigen Netzwerks ist, wobei ein vertrauenswürdiges Netzwerk durch eine Vielzahl von Elementen und eine Vielzahl unabhängiger Proxies vordefiniert ist, wobei die Kommunikation in einem vertrauenswürdigen Netzwerk auf einer Anonymisierungsnetzwerkplattform (104) stattfindet, die die IP-Adressen der Elemente des vertrauenswürdigen Netzwerks maskiert, wobei die Vorrichtung Mittel umfasst, um die Schritte des Verfahrens nach einem der Ansprüche 1 bis 14 durchzuführen.

**Claims**

1. A method (300) for the anonymous transmission of information, the transmission being a point-to-multipoint communication or a multipoint-to-multipoint communication between members of one and the same trusted network, a trusted network being predefined by a plurality of members and a plurality of independent proxies, the communication within a trusted network taking place on an anonymization network platform (104) that masks the IP addresses of the members of said trusted network, the method being computer-implemented and comprising steps of:

   - from a member of a trusted network comprising N' members and N proxies, generating (302) a plurality N of complementary data fragments, from an initial data packet, such that recombining the N complementary fragments makes it possible to reconstruct the initial data packet;
   - said sending member transmitting (304), via the anonymization network platform, each generated complementary fragment to an independent proxy from among the N proxies, respectively;
   - each independent proxy retransmitting (306), via the anonymization network platform, the complementary fragment received from said sending member to the plurality N' of members of the trusted network; and
   - each receiving member of the trusted network recombining (308) the plurality N of received complementary fragments in order to reconstruct the initial data packet.

2. The method according to claim 1, comprising an initial step of defining, from among the plurality N' of members of the trusted network, at least three receiving members, and/or of defining, from among the plurality N of independent proxies, at least two proxies for relaying the transmission of the complementary fragments to the receiving members.

3. The method according to claim 1 or 2, wherein the step of generating a plurality N of complementary fragments consists in applying a shared-secret function F() to said initial data packet, and the step of recombining the plurality N of received complementary fragments consists in applying the inverse shared-secret function $F^1$ () to said complementary fragments.

4. The method according to claim 3, wherein the shared-secret function is an XOR function with or without latency.

5. The method according to claim 4, wherein the step of generating a plurality N of complementary fragments consists in generating N-1 random fragments of a length equal to the length of the initial data packet, and wherein the last fragment N is a fragment complementary to the previous ones.

6. The method according to any one of claims 2 to 5, wherein the initial step further comprises a step of defining a shared-secret function F() for a subset of the plurality N' of members of the trusted network.

7. The method according to claim 6, wherein the step of the sending member transmitting the complementary fragments comprises, at the same time or sequentially, transmitting the shared-secret function to each proxy, or directly comprises the function of reassembly via the complementary fragments.

8. The method according to any one of claims 1 to 7, further comprising, after the recombination step, at least one receiving member of the trusted network implementing the generation (302), transmission (304), retransmission (306) and recombination (308) steps of claim 1 in order to send an anonymous response to said anonymous sending member.

9. The method according to any one of claims 1 to 8, wherein the retransmission step performed by the proxies consists in at least two proxies retransmitting their received complementary fragment to a subset of the plurality of receiving members.

10. The method according to any one of claims 1 to 9, wherein the step of transmitting the complementary fragments to the proxies consists in transmitting, in addition to the complementary fragments, data or random fragments devoid of meaning and recognized as noise at the application level.

**11.** The method according to any one of claims 1 to 10, further comprising, before the step of the proxies retransmitting the received complementary fragments, a step of the proxies storing said received complementary fragments.

**12.** The method according to any one of claims 1 to 11, wherein the step of the proxies retransmitting the complementary fragments further comprises a step consisting in each proxy notifying the transmission of the complementary fragment to a member of the trusted network in charge of access to the anonymization network platform, said notification possibly being a message including information relating to the performance of the transmission, notably information relating to the size, to the data rate, and to the unidirectional or bidirectional nature of the data packet.

**13.** The method according to any one of claims 1 to 12, further comprising, after the fragment recombination step, a step of generating a grading of the received data packet.

**14.** The method according to any one of claims 1 to 13, wherein one, several or all of the proxies are hosted by one or more of the members of the trusted network.

**15.** A computer program product, said computer program comprising code instructions for carrying out the steps of the method according to any one of claims 1 to 14, when said program is executed on a computer.

**16.** A device for the anonymous transmission of information, the transmission being a point-to-multipoint communication or a multipoint-to-multipoint communication between members of one and the same trusted network, a trusted network being predefined by a plurality of members and a plurality of independent proxies, the communication within a trusted network taking place on an anonymization network platform (104) that masks the IP addresses of the members of said trusted network, the device comprising means for implementing the steps of the method according to any one of claims 1 to 14.

# Fig. 1

# Fig. 2

<u>200</u>

# Fig. 3

300

N' membres de cercle de confiance                    N Proxies

302

Fragmentation
du paquet
avec F() en N
fragments

Emetteur

304   Transmission
de chaque fragment
à un proxy

306   Transmission par
chaque proxy de
son fragment aux
N' membres

Chaque membre
retrouve le paquet
en appliquant $F^{-1}()$
aux fragments reçus

308

# Fig. 4a

P$_1$

P$_2$

P$_N$

...

104

102

Etape 304

Fragment 1

Data  F()
=>  Fragment 2

Fragment N

M$_1$

M$_2$

...

M$_{N'}$

Etape 302

# Fig. 4b

$P_1$  $P_2$  ...  $P_N$

Etape 306

104  102

| Fragment 1 |
|---|
| Fragment 2 |
| Fragment N |

$F^{-1}()$
$\Rightarrow$

| Data |
|---|

$M_1$  $M_2$  ...  $M_{N'}$

Etape 308

# Fig. 5a

$P_1$ $P_2$ $P_N$

...

Etape 504

104 102

$M_1$ $M_2$ ... $M_{N'}$

Réponse$_{Mj}$ $\xRightarrow{F()}$ Fragment$_{Mj}$1

Fragment$_{Mj}$2

Fragment$_{Mj}$N

Etape 502

# Fig. 5b

$P_1$   $P_2$   ...   $P_N$

104    102

Etape 506

$\text{Fragment}_{Mj}1$

$\text{Fragment}_{Mj}2$   $F^{-1}()$   $\text{Réponse}_{Mj}$

$\text{Fragment}_{Mj}N$    $=>$

$M_1$    $M_2$   ...   $M_{N'}$

Etape 508

# Fig. 6

P₁ P₂ ... Pₙ

Etape 606

104

102

Fragment 1

Data  F()  Fragment 2
      =>

Etape 602

Etape 606

Etape 604

M₁

M₂ ... Mₙ'

Fragment 1

Fragment 2  F()  Data
            =>

Etape 608

# Fig. 7a

# Fig. 7b

$P_{N-1}$

$P_N$

...

Etape
306

Etape
306

104

102

Etape
306

$P_1$

$M_1$

$M_2$

...

$M_{N'}$

**RÉFÉRENCES CITÉES DANS LA DESCRIPTION**

**Documents brevets cités dans la description**

- WO 2019072470 A1